# EUROPEAN PATENT APPLICATION

(11) **EP 4 775 038 A1**
(43) Date of publication of application: **15.07.2026**
(21) Application number: 25382008.8
(22) Date of filing: 09.01.2025
(51) Int. Cl.: A22C 11/12

(54) **A MACHINE FOR THE MANUFACTURE AND CLOSURE OF SAUSAGE PRODUCTS**

(71) Applicant: Lorenzo Noguera, Sagar, 08302 Mataró, Barcelona (ES)
(72) Inventor: Lorenzo Noguera, Sagar, 08302 Mataró, Barcelona (ES)
(74) Representative: ABG Intellectual Property Law, S.L.

(57) **Abstract**

The present invention relates to a machine (100) for manufacturing and closing stuffed meat products with a closing device (2) mounted in the machine (100) in a displaceable manner between at least two positions, one of which is a withdrawn position (N) suitable for supplying a closing element to the closing device so that it can apply said closing element on an empty longitudinal casing portion, wherein the displacement of the closing device (2) is brought about by an actuator (31) and transmitted to the closing device (2) through a kinematic chain (32), the machine being equipped with means for the non-manual updating of the amount of movement that the actuator (31) must impart to the kinematic chain (32) to ensure that in the displacements of the closing device (2) towards the mentioned withdrawn position (N) the closing device (2) is stopped in said withdrawn position (N) with required precision, with position deviations caused by wear and/or misalignments in the kinematic chain being corrected.

## Description

### Technical Field of the Invention

The invention belongs to the field of manufacturing and closing stuffed meat products, in which a product mass is stuffed into a tubular casing closed at respective distal and proximal ends. An example of stuffed meat product is a sausage.

Among other components, machines that automate stuffed meat product manufacture and closure have means for forming, in a casing portion previously filled with a product, an empty longitudinal casing portion on which a closing device acts, specifically to apply at least one closing element tightly enclosing the mentioned empty longitudinal casing portion.

### Background of the Invention

A known technique for automating the production of sausages comprises extruding a food product mass into a continuous tubular casing portion; forming an empty longitudinal casing portion in the previously filled casing; and applying at least one closing element tightly enclosing the mentioned empty longitudinal casing portion, closing it. By applying two closing elements on the empty longitudinal casing portion, two closures are made, one serving to finish a sausage and the other serving to enable stuffing more product and continuing with the manufacture of a new sausage which will be completed by repeating the aforementioned operations on a subsequent empty longitudinal casing portion. If the empty casing portion between the two recently applied closing elements is also cut transversely, the finished sausage is separated from the new sausage being manufactured.

Conventional closing elements are, solely by way of example, staples or strips made of metal or a metal core. Closing elements are also sometimes referred to as clips.

Sets of constrictors are used to form the empty longitudinal casing portion. A constrictor is a mechanism that can be actuated and is configured to reduce the cross-section of a filled casing, bringing the casing together sufficiently to enable applying a closing element thereon to tightly enclose it. It is known to arrange two constrictors in series of a filled casing portion such that, starting from a relative position of the constrictors being closest to one another and increasing the distance separating them as each constricts the casing, the product inside the casing is displaced and the empty longitudinal casing portion, on which the closing element or elements will be applied, is formed.

To apply the closing element or elements, a first type of closing device which mounts an upper jaw and a lower jaw that can be actuated from a position of being farthest away from one another to a position of being closest to one another, and vice versa, is known. In the position of being closest to one another, the jaws meet the empty longitudinal casing portion and close one or more closing elements around said portion. Examples of closing elements that are compatible with this first type of closing device are described, for example, in patent documents DE3715626 and EP1970321; and an example of a closing device fed with this type of closing elements is described in patent document PL1743838. A typical accumulation of these closing elements consists of a strip of sheet metal machined to form a string of concatenated closing elements that can be wound on a reel or the like, as described, for example, in patent document PL1845026.

Advantageously, the jaws, in the position of being farthest away from one another, leave room so that the constrictors can adopt their position of being closest to one another. In other words, the closing device does not interfere with or hinder the set of constrictors from being able to form the empty longitudinal casing portion.

However, this first type of closing device has drawbacks, one of which is that the specific shape of the closing elements, i.e., a slightly omega shape, and the fact that they have a rectangular cross-section make it impossible for the opposing legs of the closing elements to overlap laterally when acted on to close them around the empty longitudinal casing portion, or to do so in a controlled manner. Accordingly, the section of passage that will be provided by the closing element when it is closed around the empty longitudinal casing portion cannot be adjusted, preventing the application of the same closing elements around casing portions that are more or less bulky. Accordingly, the operation must be performed with closing elements of different sizes depending on the parameters of the casing.

A second type of closing device which mounts an anvil and a head at a fixed interdistance is known for applying the closing element or elements, the head having at least one punch that can be actuated back and forth in a guided manner the displacement of which in one direction serves to drive the movement of and flatten a closing element against the anvil, which is configured to deform said closing element by closing it around the empty longitudinal casing portion. An example of a closing element compatible with this second type of closing device is described, for example, in patent document EP0757003; and an example of a closing device fed with this type of closing elements is described in patent document US 2008209855. A typical accumulation of these closing elements consists of a series of laterally juxtaposed closing elements, linked to one another by means of an adhesive tape or the like, the series being able to be wound on a reel or the like, as described, for example, in patent documents EP3388692 and EP2042436.

Advantageously, the specific shape of these closing elements, i.e., a general U shape, being facilitated in the case of the elements also having a rounded cross-section, makes it possible for the opposing legs of the closing elements to be able to overlap laterally when they are actuated to close them around the longitudinal casing portion. Specifically, by adjusting the displacement of the punch, the extent to which the opposing legs of the sealing element overlap when the closing element is flattened around the empty longitudinal casing portion can be altered, thereby making it possible to adjust the section of passage provided by the closing element when it is flattened, allowing the application of closing elements around casing portions that are more or less bulky. This second type of closing device is therefore more versatile than the first type of closing device.

However, this second type of locking device presents a drawback when it must operate in a machine with a set of constrictors and that the fixed distance between the anvil and the head does not leave enough room for the constrictors to adopt their position of being closest to one another. In other words, that position of the closing device that makes it capable of performing operation on the casing is a position that interferes with the movement of the set of constrictors, preventing them from forming the empty longitudinal casing portion. It is for this reason that in machines equipped with this second type of closing device, and at the same time with a set of constrictors, the closing device is a device that can be displaced between at least two positions in coordination with the set of constrictors, one of which is a withdrawn position, in which it does not perform any operation on the empty longitudinal casing portion but does not hinder the set of constrictors from forming the empty longitudinal casing portion, and the other is a working position, which performs an operation on the empty longitudinal casing portion and can be adopted when the constrictors are separated from one another, providing said empty longitudinal casing portion.

A first objective of the present invention is to disclose a machine the displacement of the closing device of which between the withdrawn position and the working position can be rapid, so as not to condition the cadence, or constitute the bottleneck, of the machine in which it is incorporated.

In similar situations, a pneumatic actuator has been used to displace the closing device, particularly in large-caliber sausage manufacturing machines which use large closing elements and in which the slowness of the displacement is not a handicap given that the stuffing time is greater than the time required to move the closing device from its working position to its withdrawn position, to form the empty longitudinal casing portion and to move the closing device back to its working position. That is, a reduction in the time of displacing the closing device will not translate into a reduction of the productive cycle time of the machine.

This same pneumatic actuator is too slow to displace the closing device when the stuffing time is very short, as this slowness will then mean a bottleneck that reduces the productive cycle time of the machine. Furthermore, practice shows that the loss of precision with use derived, for example, from wear of the dynamic seals, means that the closing device is not stopped with the required accuracy in the withdrawn position, which in turn leads to a poor supply of the closing elements to the head of the closing device.

Another objective of the present invention is for the machine to provide the desired speed, while ensuring a minimum of required precision.

Short stuffing times are typical in the manufacture of small-caliber sausages, which at the same time use small closing elements, which at the same time must be fed or supplied to the head of a closing element through a small supply window, commensurate with the dimensions of the closing element to ensure that the closing element is properly delivered and placed correctly in the head, otherwise it will be unevenly driven by the punch or other errors which may result in the compulsory shutdown of the machine may occur.

In fact, mechanical adjustments which allow achieving this precision prove to be inefficient throughout the manufacture of a batch of products or as the machine is operated and production cycles are run.

Therefore, another objective of the present invention is for the machine to provide the desired precision throughout the use of the machine.

Finally, another objective of the invention relates to a method of manufacturing and closing stuffed meat products using machines which automate same, reducing the number of incidents which force the machine and the manufacture of the corresponding product to stop.

### Description of the Invention

The proposed machine is a machine according to claim 1.

The machine comprises a separator device with moving parts and configured to form in a tubular casing portion previously filled with a product mass an empty longitudinal casing portion; a closing device configured to apply at least one closing element tightly enclosing the mentioned empty longitudinal casing portion, closing it; and at least one closing element supplier configured to supply closing elements to the closing device, wherein the closing device is mounted in the machine in a displaceable manner between at least two positions in coordination with the movement imparted to the moving parts of the separator device, one of which is a withdrawn position (N), in which it does not perform any operation on the empty longitudinal casing portion and in which it does not hinder the movement imparted to the moving parts of the separator device so that they form the empty longitudinal casing portion, and the other is a working position (Y), in which it performs an operation on the empty longitudinal casing portion, and wherein the displacement of the closing device is brought about by an actuator and transmitted to the closing device through a kinematic chain.

The machine is characterized in that the at least one closing element supplier and the closing device are mutually prepared so that the former can supply a closing element to the latter when the closing device adopts, with required precision, the withdrawn position (N), and particularly in that the machine is equipped with means for the non-manual updating of the amount of movement that the actuator must impart to the kinematic chain to ensure that in the displacements of the closing device towards its withdrawn position (N) the closing device is stopped in said withdrawn position (N) with required precision, with position deviations caused by wear and/or misalignments in the transmission, that is, in the kinematic chain, being corrected, and without the operator having to manually update or adjust said amount of movement based on visual inspection or trial and error.

A kinematic chain is an assembly of interconnected parts such that they provide a controlled output movement in response to an amount of input movement provided. The mentioned amount of input movement is the amount procured by the actuator in the present invention.

A kinematic chain typically suffers wear and/or misalignments with use and this wear and/or misalignment causes one and the same amount of input movement provided by the actuator not providing the same output movement.

The means for the non-manual updating of the amount of movement that the actuator must impart to the kinematic chain to ensure that in the displacements of the closing device towards its withdrawn position (N) the closing device is stopped in said withdrawn position (N) with required precision are particularly configured to practice inverse kinematic: determining the input variables required (here the amount of movement of the actuator) to achieve a specific output configuration (the configuration that stops the closing device in the withdrawn position (N) with required precision, with position deviations caused by wear in the transmission being corrected).

To that end, In one variant of the invention, the actuator is a servomotor with an associated controller which actuates a drive shaft connected to and bringing about the movement of the kinematic chain; and the means for the non-manual updating of the amount of movement that the drive shaft transmits to the kinematic chain to ensure the precision with which the closing device adopts the withdrawn position in productive cycles of the machine (N) comprise a mechanical displacement stop
- which, in a machine calibration cycle, limits the travel stroke of the closing device towards the withdrawn position in order to stop it when it adopts the withdrawn position with a target precision, and
- which thereby triggers the generation of an excessive torque signal (Tmax) in the controller of the servomotor which is associated with a reference position value (Pt) of the mentioned drive shaft, which reference position value (Pt) may be used temporarily to control the servomotor in subsequent productive cycles of the machine until a new reference position value (Pt) is obtained in a new calibration cycle.

In this variant of the invention, the amount of movement is an amount of rotation of the drive shaft, specifically the amount necessary to arrange the drive shaft in compliance with the reference position value (Pt).

It is contemplated for the machine to be prepared so that the speed regime imparted to the displacement of the closing device when running a calibration cycle is different from the speed regime imparted to the displacement of the closing device when running a productive cycle of the machine.

It is also contemplated for the machine to be prepared so that the position value (Pp) used to control the servomotor in productive cycles of the machine following a calibration cycle is a factor of the reference position value (Pt) or the result of applying a corrective subtrahend to said reference position value (Pt).

According to a variant of the invention, the mechanical displacement stop is a position-adjustable stop.

Preferably, the mechanical displacement stop comprises a fixed part, solidly joined to the chassis of the machine, and a striking element solidly joined to the closing device, which gently hammers the fixed part in the withdrawn position (N) when running the calibration cycle.

More preferably, the striking element has a rod threadedly linked with the closing device, with the position adopted by a head of the striking element being able to be adjusted with respect to the closing device by means of an operation of threading or unthreading said rod.

In one variant of the invention, the closing device comprises a head and an anvil, wherein the head provides, for each closing element supplier, a channel to guide a closing element placed in said channel towards an outlet end of the channel, which opens into the anvil, pushed by a punch which can be actuated back-and-forth along the channel; and the channel is accessible for the closing element through a supply window and only when the closing device adopts, with precision, the withdrawn position (N).

According to one embodiment, the channel is provided with a retainer or brake for the closing element in the displacement thereof towards the outlet end of the channel; and the punch can be actuated in two strokes to push, in two phases, a closing element placed in the channel
- in a first phase of pushing sufficiently in order to separate it from a closing element which is continuous thereto in a closing element storage and to move it through the channel towards the outlet end up to the level of the retainer or brake, which is designed to provide sufficient resistance to the involuntary advancement of the closing element;
- in a second phase of pushing sufficiently to overcome the retainer or brake force exerted on the closing element by the retainer or brake and to move it until passing the outlet end and flattening it against the anvil,
all this with the first phase being initiated with the closing device adopting the withdrawn position (N) and the second phase being completed with the closing device adopting the working position (Y).

In one variant of the invention, the first phase of pushing is completed with the closing device adopting the withdrawn position (N).

According to another aspect of the invention, in one variant thereof the machine has two closing element suppliers, located in a fixed manner opposite one another in the machine, for placing respective first closing elements from respective closing element storages in respective associated channels of the head of the closing device through respective associated supply windows when the closing device adopts the withdrawn position (N); and the machine is provided with means for ensuring the correct alignment of the two closing element suppliers to enable placing, preferably in a simultaneous manner, each closing element in the associated channel of the closing device through the associated supply window when the closing device adopts its withdrawn position (N).

According to one embodiment, the means for ensuring the correct alignment of the two closing element suppliers comprise alignment holes provided in the closing element suppliers and in the closing device and an accessory rod of sufficient length to be tightly inserted and at the same time into an alignment hole of at least one closing element supplier and into the alignment hole of the closing device when the closing device adopts its withdrawn position (N).

The machine according to claim 1 is equipped with means configured for practicing inverse kinematic: determining the input variables required (the amount of movement of the actuator) for controlling the kinematic chain and positioning same in a desired manner, without the operator having to manually adjust this amount of movement based on visual inspection visual or trial and error so that the closing device is stopped in the withdrawn position (N) with required precision, with position deviations caused by wear in the transmission being corrected.

The invention also relates to a method to that end.

The method comprises updating the amount of movement that the actuator must transmit to the kinematic chain that displaces the closing device from its working position (Y) to its withdrawn position (N) in productive cycles of the machine, the method comprising running a machine calibration cycle to automatically obtain a parameter of the actuator that is used to update the mentioned amount of movement.

In that version of a machine where the actuator is a servomotor with an associated controller which actuates a drive shaft connected to and bringing about the movement of the kinematic chain, a method comprises
a) running a machine calibration cycle in which the travel stroke of the closing device towards its withdrawn position is mechanically limited (N) with the mechanical displacement stop to trigger the generation of an excessive torque signal (Tmax) in the controller that stops the closing device in its withdrawn position (N) with a target precision of the servomotor corresponding with a reference position value (Pt) of the drive shaft of the servomotor (31.1); assigning this reference position value (Pt), or a value derived from same, as a position value (Pp) to be used for controlling the servomotor (31.1) in subsequent productive cycles of the machine (100), specifically for stopping same when the closing device (2) is displaced from its working position (Y) to its withdrawn position (N), until a new reference position value (Pt) is obtained in a new calibration cycle;
b) running n productive cycles of the machine using the position value (Pp) to order the amount of movement that the drive shaft transmits to the kinematic chain displacing the closing device from its working position (Y) to its withdrawn position (N); and repeating steps a) and b).

In one variant of the method, the reference position value (Pt) of the drive shaft is obtained by means of a rotary position encoder providing an output corresponding to the rotation of the drive shaft, either in terms of voltage pulses if an incremental encoder is used or absolute angular position if an absolute encoder is used.

### Brief Description of the Drawings

Figures 1a and 1b are respective front views of a machine exemplifying the invention in two instants of a productive cycle.
Figure 2a and 2b are respective simplified views sides of the machine of Figure 1, in the instants of a productive cycle shown in Figures 1a and 1b, respectively.
Figure 3 is a partially sectioned perspective view of the detail of the head and anvil of the closing device of the machine exemplifying the invention.
Figure 4 is a block diagram of a method for updating the amount of movement which an actuator, in the example a servomotor, must transmit to the kinematic chain that displaces the closing device, including the method a step of calibrating the machine.

### Detailed Description

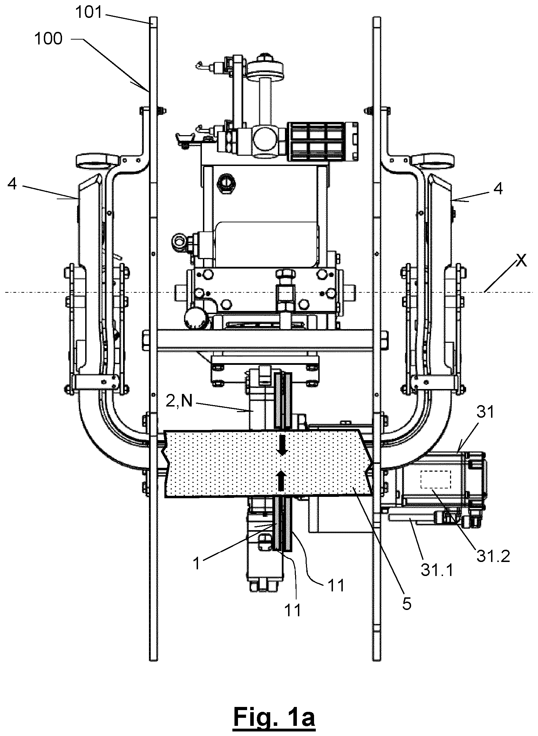

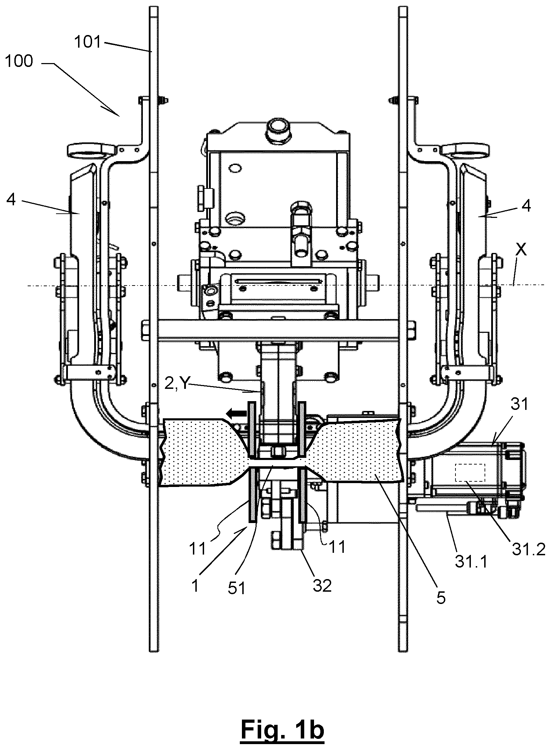

Figures 1a and 1b are respective front views of a machine 100 exemplifying the invention.

The exemplary machine 100 has a fixed frame 101 supporting several devices suitable for performing operation on a tubular casing portion 5 previously filled with a product mass.

Among these devices, a separator device 1 and a closing device 2 are mounted in the machine 100 in a displaceable manner, these devices being able to be actuated in coordination to perform each of the functions thereof.

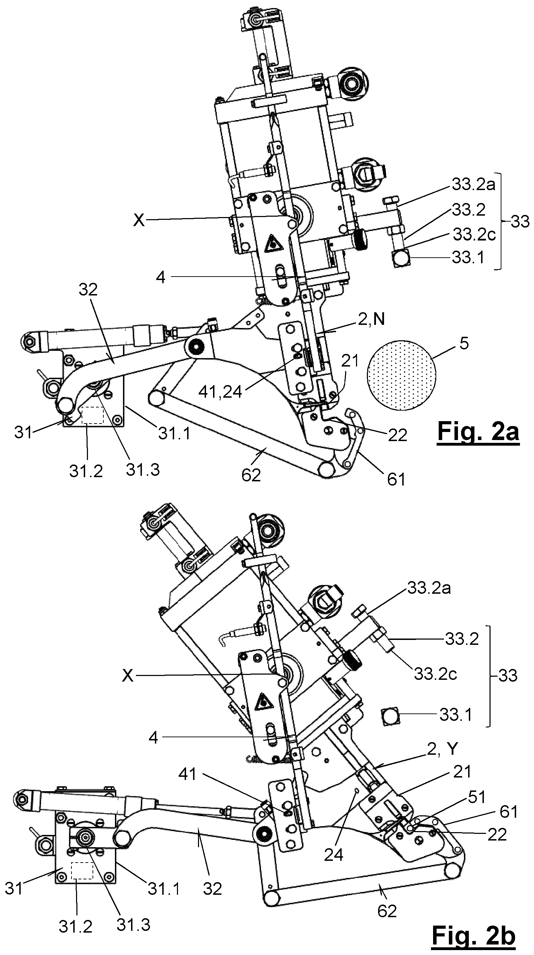

The separator device 1 is a conventional device, with moving parts and capable of forming an empty longitudinal casing portion 51 in the mentioned previously filled tubular casing portion 5 (see Figures 1b and 2b).

Since it is conventional, the separator device 1 is only illustrated schematically in Figures 1a and 1b, being of the type comprising two constrictors 11, each being able to be actuated to go from adopting a shape in which it provides passage for the filled casing portion 5, a situation illustrated in Figure 1a, to a shape in which it constricts the mentioned casing, a situation illustrated in Figure 1b. The separator device 1 can also be actuated to alter the distance separating the two constrictors 11 from one another.

In the exemplary machine 100, the constrictor 11 shown on the left side of the images can be actuated to move away from the constrictor 11 shown on the right side of the images. When this displacement occurs, without the constrictors 11 constricting the casing, product inside the casing is displaced or moved, thereby obtaining the empty longitudinal casing portion 51, as schematically illustrated in Figure 1b.

The closing device 2 is capable of applying two closing elements tightly enclosing the mentioned empty longitudinal casing portion 51.

To that end, the closing device 2 comprises a head and an anvil, described in more detail below, which maintain a fixed distance between them, the head being equipped with means for flattening two closing elements originally having a general U shape against the anvil, deforming them like a staple. By arranging the closing device 2 such that the empty longitudinal casing portion 51 is between the head and the anvil when this occurs, the closing elements are applied on the empty longitudinal casing portion, tightly enclosing said portion and closing it.

Though not depicted in the drawings, the machine 100 is conventionally equipped with means for transversely cutting the empty casing portion 51 at a point between the two closing elements applied thereon.

Note that the position that the closing device 2 must adopt to arrange the empty longitudinal casing portion 51 between the head and the anvil, in order to apply the closing elements thereon, is a position which interferes with the position that the constrictors 11 of the closing device must adopt (see Figure 1a) to start constricting the filled casing portion 5.

It is for this reason that the closing device 2 is mounted in the machine 100 in a displaceable manner between two positions, more readily visible in simplified Figures 2a and 2b, which are a withdrawn position (N) and a working position (Y).

In the example, the closing device 2 is rotatably mounted about a rotating shaft X in the chassis of the machine 100.

To enable a better view of the positions of the closing device 2, neither the chassis of the machine nor the separator device were shown in the mentioned Figures 2a and 2b.

In the withdrawn position (N), although the closing device 2 is out of the range of the product being manufactured, it does not hinder the work of the constrictors 11 of the separator device 1 so that they form the empty longitudinal casing portion 51 starting from their position of being closest to one another (the position depicted in Figure 1a).

In the working position (Y), the closing device 2 performs an operation on the recently formed empty longitudinal casing portion 51 without interfering with the constrictors 11 when they adopt their position of being farthest away from one another (the position depicted in Figure 1b).

The machine 100 further comprises two closing element suppliers 4, configured to jointly supply two closing elements to the closing device 2.

In the exemplary machine 100, the two closing element suppliers 4 are fixed and each of them consists essentially of a rail along which an accumulation of closing elements can slide, in the form of a series of laterally juxtaposed closing elements 7 linked to one another, for example, by means of an adhesive tape, each closing element being configured in a general U shape.

Each rail leads an associated series of closing elements to a supply window formed in the head of the closing device 2, which allows access to a channel the purpose and function of which is explained in greater detail below, for inserting the first closing element of the series into said channel, which is possible when the closing device 2 is stopped in the mentioned withdrawn position (N).

The displacement of the closing device 2 between the working position (Y) and the withdrawn position (N), and vice versa, is brought about by an actuator 31 and transmitted to the closing device 2 through a kinematic chain 32, visible in Figures 2a and 2b.

The kinematic chain can be implemented in different ways, without affecting the practice of the invention. In the exemplary case, the kinematic chain comprises a connecting rod-crank mechanism.

In any case, the precision with which the actuator 31 stops the closing device 2 in the withdrawn position (N) it adopts in Figures 1a and 22 is crucial, because only then a first closing element 7 of the series of closing elements will be able to be correctly inserted into the channel of the head through the supply window.

At the same time, the speed at which the actuator 31 must move the closing device 2 between the working position (Y) and the withdrawn position (N) is also important, because only in this way the machine 100 will not condition the productive cycle time and this displacement will not constitute the bottleneck of the cycle, which may occur when a newly filled casing portion 5 is served very quickly to the machine for closure.

To comply with these two requirements, in the exemplary machine 100 the actuator 31 is a servomotor 31.1 with an associated controller 31.2 (schematically illustrated as being located in the servomotor in the drawings, although it can be located outside the servomotor) which actuates a drive shaft 31.3 connected to and bringing about the movement of the kinematic chain 32.

Even when the use of a servomotor provides the required speed capacity, and even when it is typical to use the controller of a servomotor to establish those stop positions that are of interest for the control thereof, these known measures prove to be insufficient for application in a machine for manufacturing and closing stuffed meat products and particularly for displacing the closing device 2 in the way and with the precisions explained above. Specifically, practice demonstrates that an initially satisfactory precision becomes insufficient throughout productive cycles of the machine, resulting in an unsatisfactory supply of closing elements 7 to the head of the closing device 2.

Among other possible causes, the kinematic chain 32 which transmits the rotation of the drive shaft 31.3 of the servomotor 31.1 to the closing device 2 is a kinematic chain incorporating hinges and/or connections subject to wear that generate clearances between moving parts which absorb part of the amount of movement applied by the drive shaft 21.3 on the kinematic chain 32, with the occurrence of transmission losses affecting the precision with which the closing device 2 is stopped in the withdrawn position (N) even when the drive shaft 31.3 is always stopped in the same absolute position.

In order to provide solution to this loss of precision, the machine 100 exemplifying the invention is equipped with means for updating the amount of movement that the actuator 31 must impart to the kinematic chain 32 in productive cycles of the machine to ensure that in the displacements of the closing device 2 towards its withdrawn position (N) the closing device 2 is stopped in said withdrawn position (N) with required precision.

These means comprise a mechanical displacement stop 33 which, in a machine calibration cycle, limits the travel stroke of the closing device 2 to the withdrawn position (N) so as to stop it in said withdrawn position (N) with a target precision. This mechanical stopping triggers the generation of an excessive torque signal Tmax in the controller 31.2 of the servomotor 31.1 programmed to then cause the stopping thereof, with a reference position value Pt of the mentioned drive shaft 31.3 then being noted down, reference position value Pt which will be temporary because it will be used to establish the position value Pp that will be used to control the servomotor 31.1 in subsequent productive cycles of the machine 100 until said reference position value Pt is updated again.

The reference position values Pt of the drive shaft 31.3 are conventionally obtained by means of a rotary position encoder providing an output corresponding to the rotation of the drive shaft, either in terms of voltage pulses if an incremental encoder is used or absolute angular position if an absolute encoder is used.

Tmax can be an absolute value or a relative value, such as the value resulting from applying a factor x on the nominal value of the maximum safety torque of the motor used.

Only by way of example, Tmax can be selected from 5÷15 Nm; preferably from 6÷12 Nm, more preferably from 7÷10 Nm, being able to be, for example, Tmax=7.6 Nm.

Continuing with the preceding example, also as an example, a MINAS A6 servomotor (Art. MSMF042L1U1) with a gear i=15 with a nominal value of the maximum safety torque of 19.05 Nm, can be used. Then, a factor x=0.4 is applied to practice the invention with Tmax=7.6 Nm.

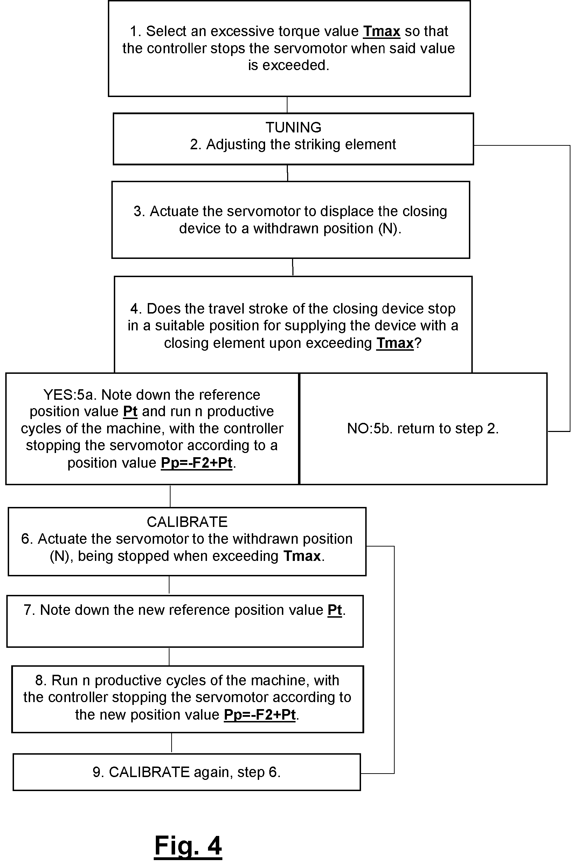

Figure 4 shows how this calibration can be performed by way of a block diagram, where the machine can be prepared for calibration when at least one of the following conditions is met, or according to a pre-established logical form when a combination of several of these conditions is met simultaneously:
- every time a working day starts;
- every time the operation of the machine is started after a stop that is longer than a preestablished time;
- every time the parameters of the product to be produced are changed, such as casing material, type of product mass to be stuffed, stuffing pressure, etc.;
- every time the closing elements are replaced;
- or simply, after each n productive cycles, n being a preestablished number, which is the characteristic case exemplified in the diagram of Figure 4.

In the specific example of the diagram of Figure 4, a calibration cycle is performed after each n productive cycles without changing the parameters of the product to be manufactured, n being a preestablished number.

The number n can change throughout the use of the machine. For example, it may be of interest to reduce the value of the number n every time a machine calibration cycle is performed. When the parts of the kinematic chain with relative movement between them sustain more wear, the more recurrent will be the need to calibrate the machine and determine a new reference position value Pt.

Only by way of example, if the choice is made to proceed to calibration after every n productive cycles without changing the parameters of the product to be manufactured, a first value of n can be of several millions of cycles, for example a value close to 3M; using HC25-2700 type closing elements from the supplier Suministros Lorenzo Barroso, obtaining in each productive cycle a sausage having a caliber of 25-120 mm and a length of 250 mm, which means that in a productive cycle the closing device 2 will perform operation on a casing two times, applying two closing elements each time on a respective empty longitudinal casing portion.

Alternatively, without this affecting the practice of the invention, a productive cycle of the machine may be considered every time the closing device is displaced back and forth between the working position (Y) and the withdrawn position (N) having been applied two closing elements on an empty longitudinal casing portion.

In the exemplary machine 100, the mechanical displacement stop 33 is a position-adjustable stop. To that end, the mechanical displacement stop 33 comprises a fixed part 33.1, solidly joined to the chassis 101 of the machine, and a striking element 33.2 solidly joined to the closing device 2, which gently hammers the fixed part 33.1 in the withdrawn position (N) when running the calibration cycle.

The striking element 33.2 may or may not hammer the fixed part 33.1 in the withdrawn position (N) when running productive cycles of the machine.

For example, the position value Pp which controls the displacement of the closing device 2 in productive cycles of the machine can be equivalent to the reference position value Pt or can be a factor of the reference position value Pt, by way of a corrective factor, to stop the closing device 2 in the withdrawn position (N) right before the striking element 33.2 hammers the fixed part 33.1, or to attenuate the impact exerted by the striking element 33.2 upon hammering the fixed part 33.1, all this with the required precision also being ensured.

That is, it is contemplated that Pt=Pp. It is also contemplated that Pt=F1*Pp or Pt=F2+Pp, where, for example, F1 or F2 are selected so that the position value Pp corresponds to a value of between 0.1° and 3° (degrees) of rotation, more preferably between 0.2° and 1°, for example, 0.5°, lower than value Pt.

Any of the preceding variants is compatible with providing a braking curve to the controller of the servomotor 31.1 that the drive shaft 31.3 can follow until the closing device 2 is stopped in the withdrawn position (N), both in calibration cycles and preferably in productive cycles.

Calibration can be performed in production conditions, that is, at the displacement speed which will be imparted to the closing device 2 in productive cycles, when manufacturing the products.

Calibration can be performed in conditions different from production conditions, that is, at a displacement speed lower than that which will be imparted to the closing device 2 when manufacturing the products.

In the exemplary machine 100, the striking element 33.2 has a rod 33.2a threadedly linked with the closing device 2, with the position adopted by a head 33.2c of the striking element being able to be adjusted with respect to the closing device 2 by means of an operation of threading or unthreading said rod 33.2a. This allows finely adjusting the withdrawn position (N).

Only by way of example, fine adjustment may be required if one or both closing element suppliers 4 are replaced.

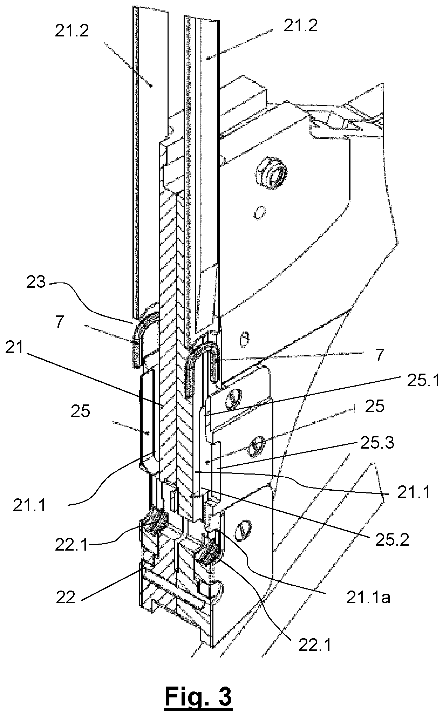

Figure 3 exemplifies a clearance of the head 21 and the anvil 22 of a closing device 2 of a machine according to the invention, which could be the specific machine 100, in this case suitable for applying two closing elements 7 on an empty longitudinal casing portion.

To that end, the head 21 has two channels 21.1, each for guiding a closing element 7 with a general U shape to an outlet end 21.1a of the channel, outlet end 21.1a which opens into the anvil 22.

The anvil 22 comprises two recesses 22.1, each configured to deform a corresponding closing element 7 displaced along a channel 21.1 to the anvil 22 and until causing the flattening thereof against said anvil 22, such that the opposing legs are bent, coming into contact with and overlapping one another laterally, forming a kind of ring that will surround the empty longitudinal casing portion tightly enclosing it at a point of application.

Each of the closing elements 7 penetrates a channel 21.1 through an associated supply window 23 (reiterated when the closing device adopts the withdrawn position (N) with precision).

To displace the closing elements 7 along the channels 21.1, the head 21 mounts two punches 21.2 that can each be actuated back and forth along a channel 21.1.

By way of example, the punches can be actuated by respective pneumatic groups or by a common pneumatic group. A pneumatic group may comprise a single- or double-effect pneumatic cylinder. The punches can also be actuated by respective electric actuators or by a common electric actuator. In any case, and as explained below, the punches being able to be actuated with the possibility of stopping halfway between their ends of travel is of interest.

In Figure 3, the punches 21.2 are in a raised position which allows placing the closing elements 7 in the channels 21.1. From this raised position, the punches 21.2 can be actuated downwards to push and drive the closing elements 7 such that it moves downwards to the outlet ends 21.1a of the channels 21.1.

In the specific example of the drawings, this is carried out in two phases which are described in reference to one of the punches.

In a first phase of pushing, starting from the position illustrated in Figure 3, there is imparted to the punch 21.2 a stroke sufficient to separate the first closing element 7 of the series of closing elements, which opens into the supply window 23 of the channel along which the punch 21.2 runs, from the one contiguous thereto in the series of closing elements. Since this first phase occurs with the channel 21.1 in a vertical position or with an inclination that may cause uncontrolled displacement of the closing element 7 released from the series along the channel 21.1 due to gravity or inertia, a retainer or brake 25 for the closing element 7 is provided in the exemplary head 21. In the first phase of pushing, the stroke imparted to the punch 21.2 is suitable for moving the closing element 7 along the channel 21.1 up to the level of the retainer or brake 25, which is designed to provide sufficient resistance to the involuntary advancement of the closing element 7.

In a second phase of pushing, there is imparted to the punch 21.2 a stroke sufficient to overcome the retainer or brake force exerted on the closing element 7 by the retainer or brake 25 and to move it until passing the outlet end 21.1a and flattening it against the anvil 22.

Although the first phase of pushing must be started with the closing device adopting the withdrawn position (N), it may or may not be completed with the closing device transitioning to the working position (Y).

Naturally, the second phase must be completed with the closing device adopting the working position (Y) so that the closing element 7 is applied on an empty longitudinal casing portion, enclosing it and closing it.

In the specific example of the drawings, the closing device is provided with a collection mechanism 62 which helps to ensure that the empty longitudinal casing portion 51 is located between the head 21 and the anvil 22 of the closing device 2, with the latter adopting the working position (Y). This collection mechanism 62 is visible in Figures 2a and 2b.

In the specific example, the collection mechanism 62 is a mechanism driven by the rotational movement transmitted to the closing device 2, that is, it does not require its own actuation means.

For the case, the collection mechanism 62 consists of a set of arms connected in an articulated manner to one another, the set comprising a first class lever the fulcrum of which is an attachment articulated around a shaft solidly joined to the closing device 2; the effort arm is connected in an articulated manner to a first end of a telescopic arm, the second end of which is linked to the chassis of the machine in an attachment articulated around a shaft solidly joined to the chassis of the machine; and the load arm is connected in an articulated manner to a concatenation of transmitter arms articulated to one another the last arm 61 of which is attached to the anvil 22 of the closing device in an attachment articulated around an shaft solidly joined to the anvil 22, and with a part that is suitable and geometrically designed to house the empty longitudinal casing portion 51 between the head 21 and the anvil 22 when the closing device adopts the working position (Y), as shown in Figure 2b.

Continuing with the description of the head 21, in the specific example of the drawings, the aforementioned retainer or brake 25 is formed by an elastic tab which tends to place a free end thereof inside the associated channel 21.1, which can be seen in more detail in Figure 3.

In the specific example of the drawings, the elastic tab has a first end 25.1 (the upper end in the drawings) which is fastened to the head 21; a body sector which is prolonged downwardly in the direction of the channel 21.1; and the aforementioned free end 25.2 (the lower end in the drawings) which, in the example, finishes with a fold projecting towards and into the mentioned channel 21.1 sufficiently to mechanically retain the closing element 7 at the end of the first phase of pushing same.

In the second phase of pushing, in order to overcome the retainer or brake force exerted on the closing element 7 by the retainer or brake 25, the tab must deform, specifically with the second free end 25.2 thereof moving away from the trajectory of the closing element 7. It can be seen in Figure 3 that, for this purpose, the head 21 has formed therein a window 25.3 that allows this deformation of the tab which, as a result of an elastic recovery force, will again adopt the natural position shown in Figure 3 once the closing element 7 has been pushed downstream of the channel 21.1.

Returning again to the possibility of being able to perform fine adjustment of the withdrawn position (N) by means of regulating the striking element 33.2, this adjustment must be performed in correspondence with the correct position in which the closing element suppliers 4 must be secured to the machine 100.

In this sense, the machine 100 exemplifying the invention is provided with means for ensuring the correct alignment of the two closing element suppliers 4 so as to enable simultaneously placing each closing element in the associated channel of the closing device 2 through the associated supply window 23 when the closing device adopts its withdrawn position (N).

The means for ensuring this correct alignment comprise alignment holes 41, 24 (visible in Figures 2a and 2b) provided in the closing element suppliers 4 and in the closing device 2, respectively, and an accessory rod, not depicted, of sufficient length to be tightly inserted and at the same time into at least one alignment hole 41 of a closing element supplier 4 and at least partially into the alignment hole 24 of the closing device 2, when the closing device adopts its withdrawn position (N).

## Claims

1. A machine (100) for manufacturing and closing stuffed meat products, the machine comprising
- a separator device (1), with moving parts (11) and configured to form in a tubular casing portion previously filled with a product mass an empty longitudinal casing portion (5),
- a closing device (2), configured to apply at least one closing element (7) tightly enclosing the mentioned empty longitudinal casing portion, closing it,
- at least one closing element supplier (4), configured to supply closing elements to the closing device (2),
wherein the closing device (2) is mounted in the machine (100) in a displaceable manner between at least two positions in coordination with the movement imparted to the moving parts of the separator device (1), one of which is a withdrawn position (N), in which it does not perform any operation on the empty longitudinal casing portion and in which it does not hinder the movement imparted to the moving parts of the separator device (1) so that they form the empty longitudinal casing portion, and the other is a working position (Y), in which it performs an operation on the empty longitudinal casing portion,
and wherein the displacement of the closing device (2) is brought about by an actuator (31) and transmitted to the closing device (2) through a kinematic chain (32), the machine being **characterized in that**
- the at least one closing element supplier (4) and the closing device (2) are mutually prepared so that the former can supply a closing element to the latter when the closing device adopts, with required precision, the withdrawn position (N), and **in that**
- the machine (100) is equipped with means for the non-manual updating of the amount of movement that the actuator (31) must impart to the kinematic chain (32) to ensure that, in the displacements of the closing device (2) towards its withdrawn position (N), the closing device (2) is stopped in said withdrawn position (N) with required precision, with position deviations caused by wear and/or misalignments in the kinematic chain being corrected.

2. The machine (100) according to claim 1, **characterized in that** the actuator (31) is a servomotor (31.1), with an associated controller (31.2), which actuates a drive shaft (31.3) connected to and bringing about the movement of the kinematic chain (32); and **in that** the updated amount of movement that the actuator (31) must impart to the kinematic chain is an amount of rotation of the drive shaft (31.3).

3. The machine (100) according to claim 2, **characterized in that** the means for the non-manual updating of the amount of movement that the actuator (31) transmits to the kinematic chain (32) to ensure the precision with which the closing device (2) adopts the withdrawn position (N) in productive cycles of the machine comprise a mechanical displacement stop (33)
- which, in a machine calibration cycle, limits the travel stroke of the closing device (2) towards the withdrawn position in order to stop it when it adopts the withdrawn position with a target precision, and
- which thereby triggers the generation of an excessive torque signal (Tmax) in the controller (31.2) of the servomotor (31.1) which is associated with a reference position value (Pt) of the mentioned drive shaft (31.3), which reference position value (Pt) may be used temporarily to control the servomotor (31.1) in subsequent productive cycles of the machine (100) until a new reference position value (Pt) is obtained in a new calibration cycle.

4. The machine (100) according to claim 3, **characterized in that** it is prepared so that the speed regime imparted to the displacement of the closing device (2) when running a calibration cycle is different from the speed regime imparted to the displacement of the closing device (2) when running a productive cycle of the machine.

5. The machine (100) according to any one of claims 2 to 4, **characterized in that** it is prepared so that the position value (Pp) used to control the servomotor (31.1) in productive cycles of the machine (100) following a calibration cycle is a factor F1 of the reference position value (Pt) or the result of applying a corrective subtrahend F2 to said reference position value (Pt).

6. The machine (100) according to any one of claims 2 to 5, **characterized in that** the mechanical displacement stop (33) is a position-adjustable stop.

7. The machine (100) according to claim 6, **characterized in that** the mechanical displacement stop (33) comprises a fixed part (33.1), solidly joined to the chassis of the machine, and a striking element (33.2) solidly joined to the closing device (2), which hammers the fixed part (33.1) in the withdrawn position (N) when running the calibration cycle.

8. The machine (100) according to claim 7, **characterized in that** the striking element (33.2) has a rod (33.2a) threadedly linked with the closing device (2), with the position adopted by a head (33.2c) of the striking element being able to be adjusted with respect to the closing device (2) by means of an operation of threading or unthreading said rod (33.2a).

9. The machine (100) according to any one of the preceding claims, **characterized in that** the closing device (2) comprises a head (21) and an anvil (22), wherein the head (21) provides, for each closing element supplier (4), a channel (21.1) to guide a closing element (7) placed in said channel towards an outlet end (21.1a) of the channel, which opens into the anvil (22), pushed by a punch (21.2) which can be actuated back-and-forth along the channel (21.1); and **in that** the channel (21.1) is accessible for the closing element (7) through a supply window (23) and only when the closing device (2) adopts, with precision, the withdrawn position (N).

10. The machine (100) according to claim 9, **characterized in that** the channel (21.1) is provided with a retainer or brake (25) for the closing element (7) in the displacement thereof towards the outlet end (21.1a) of the channel (21.1); and **in that** the punch (21.2) can be actuated in two strokes to push, in two phases, a closing element (7) placed in the channel
- in a first phase of pushing sufficiently in order to separate it from a closing element which is continuous thereto in a closing element storage and to move it through the channel (21.1) towards the outlet end (21.1a) up to the level of the retainer or brake (25), which is designed to provide sufficient resistance to the involuntary advancement of the closing element (7);
- in a second phase of pushing sufficiently to overcome the retainer or brake force exerted on the closing element (7) by the retainer or brake (25) and to move it until passing the outlet end (21.1a) and flattening it against the anvil (22),
all this with the first phase being initiated with the closing device (2) adopting the withdrawn position (N) and the second phase being completed with the closing device adopting the working position (Y).

11. The machine (100) according to claim 10, **characterized in that** the first phase of pushing is completed with the closing device (2) adopting the withdrawn position (N).

12. The machine (100) according to any one of claims 8 to 11, **characterized in that** it has two closing element suppliers (4), located in a fixed manner opposite one another in the machine, for placing respective first closing elements (7) from respective closing element storages in respective associated channels (21.1) of the head (21) of the closing device (2) through respective associated supply windows (23) when the closing device adopts the withdrawn position (N); and **in that** the machine is provided with means for ensuring the correct alignment of the two closing element suppliers so as to enable simultaneously placing each closing element in the associated channel of the closing device through the associated supply window when the closing device adopts its withdrawn position (N).

13. The machine (100) according to claim 12, **characterized in that** the means for ensuring the correct alignment of the two closing element suppliers comprise alignment holes (41, 24) provided in the closing element suppliers (4) and in the closing device (2) and an accessory rod (5) of sufficient length to be tightly inserted and at the same time into an alignment hole (41) of at least one closing element supplier and into the alignment hole (24) of the closing device (2) when the closing device adopts its withdrawn position (N).

14. A method for controlling the machine (100) according to any one of claims 1 to 13, which comprises updating the amount of movement that the actuator (31) must transmit to the kinematic chain that displaces the closing device (2) from its working position (Y) to its withdrawn position (N) in productive cycles of the machine (100), the method comprising running a machine calibration cycle to automatically obtain a parameter of the actuator (31) that is used to update the mentioned amount of movement.

15. The method according to claim 14, dependent on claim 3, **characterized in that** it comprises
a) running a machine calibration cycle in which the travel stroke of the closing device (2) towards its withdrawn position (N) is mechanically limited with the mechanical displacement stop to trigger the generation of an excessive torque signal (Tmax) in the controller that stops the closing device (2) in its withdrawn position (N) with a target precision corresponding with a reference position value (Pt) of the drive shaft (31.3) of the servomotor (31.1); assigning this reference position value (Pt), or a value derived from same, as a position value (Pp) to be used for controlling the servomotor (31.1) in subsequent productive cycles of the machine (100), specifically for stopping same when the closing device (2) is displaced from its working position (Y) to its withdrawn position (N), until a new reference position value (Pt) is obtained in a new calibration cycle;
b) running n productive cycles of the machine (100) using the position value (Pp) to order the amount of movement that the drive shaft (31.3) transmits to the kinematic chain (32) displacing the closing device from its working position (Y) to its withdrawn position (N); and
- repeating steps a) and b).

16. The method according to claim 15, **characterized in that** the reference position value (Pt) of the drive shaft (31.3) is obtained by means of a rotary position encoder providing an output corresponding to the rotation of the drive shaft, either in terms of voltage pulses if an incremental encoder is used or absolute angular position if an absolute encoder is used.
